# EUROPÄISCHE PATENTANMELDUNG

(11) **EP 4 119 522 A1**
(43) Veröffentlichungstag der Anmeldung: **18.01.2023**
(21) Anmeldenummer: 21186140.6
(22) Anmeldetag: 16.07.2021
(51) Int. Cl.: C04B 28/14, C04B 28/16, C04B 111/62

(54) **SCHNELL TROCKNENDER GEFÄLLE-ESTRICH**

(71) Anmelder: Sika Technology AG, 6340 Baar (CH)
(72) Erfinder: Underberg, Nicole, 46284 Dorsten (DE); Schneider, Nick, 48727 Billerbeck (DE)
(74) Vertreter: Sika Patent Attorneys

(57) **Zusammenfassung**

Die vorliegende Erfindung betrifft ein Verfahren zur Herstellung einer Bodenkonstruktion auf einem Substrat, bei dem ein Estrich auf das Substrat aufgetragen wird und anschließend eine Abdichtung auf den Estrich aufgebracht wird. Der Estrich basiert auf einer Estrichzusammensetzung, die ein Aluminat-Bindemittel, ein Calciumsulfat-Bindemittel und Füllstoffe umfasst, wobei die Menge an Füllstoff 30 bis 80 Gew.-% beträgt und die Gesamtmenge an Aluminat-Bindemittel und Calciumsulfat-Bindemittel 20 bis 70 Gew.-% beträgt, wobei das Gewichtsverhältnis von Aluminat-Bindemittel zu Calciumsulfat-Bindemittel im Bereich von 1:1 bis 1:5 liegt.

Das Verfahren ermöglicht eine kurze Herstellungszeit und gleichzeitig eine verbesserte Haftung zwischen Estrich und Abdichtung.

## Beschreibung

### Technisches Gebiet

Die vorliegende Erfindung betrifft ein Verfahren zur Herstellung einer Bodenkonstruktion, die eine Abdichtung enthält, und eine solche Bodenkonstruktion.

### Stand der Technik

Unter anderem im Fussbodenbereich gibt es eine Tendenz zur Verwendung von sogenannten binären und ternären Bindemitteln zur Formulierung von Baumaterialien, z.B. von Estrichen. Binäre Bindemittel umfassen als hydraulische Bindemittel Aluminatzement und Calciumsulfat. Ternäre Bindemittel umfassen darüber hinaus Portlandzement als drittes hydraulisches Bindemittel. Binäre und ternäre Bindemittel haben vor allem den Vorteil einer verkürzten Dauer bis zur Belegreife im Vergleich zu Normalzementen. Dies bedeutet, dass innerhalb einer kürzeren Zeit weitergearbeitet werden kann, was ein entscheidender ökonomischer Vorteil ist.

In Bereichen, in denen der Boden mit größeren Mengen an Wasser oder Feuchtigkeit in Kontakt kommen kann, z.B. in Badezimmern, kann eindringendes Wasser bzw. Feuchtigkeit aber beträchtliche Probleme bereiten. Es kann z.B. zur Schädigung der Bodenkonstruktion, z.B. eine Ablösung von Fliesen als möglicher Bestandteil der Bodenkonstruktion, oder zu einem Schimmelbefall kommen. Um solche Schäden zu vermeiden, ist es erforderlich, die Bodenkonstruktion mit einer Abdichtung zu versehen, um sie vor eindringendem Wasser zu schützen. Diesbezügliche Regelungen finden sich z.B. in den DIN-Normen 18531 bis 18535 oder in ZDB-Merkblättern, die vom Zentralverband des Deutschen Baugewerbes herausgegeben werden.

Relevante Ausgestaltungen sind z.B. bahnförmige Abdichtungen, z.B. in Form von Kunststoffmembranen, die in der Regel aufgeklebt werden, oder Abdichtungsstoffe, die in fließfähiger oder pastöser Form aufgebracht werden und nach Verfestigung die Abdichtung bilden. Häufig weisen solche Bodenkonstruktionen auch Bodenbeläge aus Fliesen oder Platten als Abschluss auf.

Schnellhärte Produkte auf Basis ternärer Bindemittelkonzepte, die als Estrich geeignet sind, insbesondere für den Innenbereich, sind im Handel erhältlich, z.B. Schönox^{®} CLS (Sika Schweiz AG), Ardex^{®} K75 (ARDEX Skandinavia A/S, Dänemark) oder Centro GA#50 Speed (Centro Kakel och Klinker AB, Schweden). Die Dauer der Aushärtung dieser Produkte ist aber immer noch verbesserungsbedürftig.

Bei Bodenkonstruktionen, die eine Abdichtung enthalten, ist außerdem die Haftung zwischen Abdichtung und dem darunter befindlichen Estrich für einen stabilen Aufbau wichtig. Die mit den gängigen Systemen erhaltenen Haftzugfestigkeiten zwischen Abdichtung und Estrich sind aber oft unzureichend, insbesondere wenn eine möglichst frühe Weiterverarbeitung durch Aufbringung der Abdichtung auf den aufgebrachten Estrich realisiert werden soll.

Die WO 2015/150319 A1 betrifft schnelltrocknende Gipszusammensetzungen auf Basis von Calciumaluminat und Calciumsulfat als hydraulische Bindemittel, insbesondere zur Verwendung als Spachtelmasse für Bodenbeläge.

Die WO 2016/142365 A1 betrifft eine schnell abbindende bauchemische Formulierung, die ein Bindemittel auf Basis von Calciumsulfat, mindestens einen Ettringitbildner, mindestens einen Aktivator, mindestens einen Füllstoff und mindestens ein redispergierbares Dispersionspulver enthält, sowie deren Verwendung zur Herstellung von dünnschichtigen Ausgleichsmassen, selbst verlaufenden und standfesten Spachtelmassen, Estrichbindemitteln oder Estrichmörteln, Fliesenklebemörteln, Fugenmörteln und Dichtungsschlämmen.

### Darstellung der Erfindung

Aufgabe der vorliegenden Erfindung ist es, ein Verfahren zur Herstellung einer Bodenkonstruktion mit Abdichtungsfunktion, wie einer Membran, bereitzustellen, bei der ein verkürzter Aushärtungsprozess für den Estrich und eine verbesserte Haftzugfestigkeit realisiert werden kann. Insbesondere soll eine ausreichend hohe Haftzugfestigkeit zwischen Estrich und Abdichtung auch bei möglichst schneller Aufbringung der Abdichtung nach Verlegung des Estrichs ermöglicht werden.

Es wurde festgestellt, dass diese Aufgabe insbesondere durch Einsatz einer speziellen Estrichzusammensetzung auf Basis einer Kombination von Aluminat-Bindemittel und Calciumsulfat-Bindemittel als hydraulischem Bindemittel in bestimmten Mengen und Verhältnissen gelöst werden kann.

Die Erfindung betrifft daher ein Verfahren zur Herstellung einer Bodenkonstruktion auf einem Substrat, umfassend die folgenden Schritte
a) Vermischen einer Estrichzusammensetzung mit Wasser unter Bildung einer Estrichmasse,
b) Aufbringen der Estrichmasse auf das Substrat,
c) Trocknen lassen der Estrichmasse unter Bildung eines abgetrockneten Estrichs und
d) Aufbringen einer Abdichtung auf den abgetrockneten Estrich durch
   d1) Aufkleben einer bahnenförmigen oder plattenförmigen Membran auf den abgetrockneten Estrich mittels eines Klebers oder
   d2) Aufbringen eines fließfähigen oder pastösen Abdichtungsstoffes auf den abgetrockneten Estrich, wobei der Abdichtungsstoff nach Verfestigung die Abdichtung bildet, und
e) gegebenenfalls Aufbringen eines Bodenbelags auf die Abdichtung,
   wobei die Estrichzusammensetzung umfasst
   i) ein Aluminat-Bindemittel ausgewählt aus Calciumaluminatzement und/oder Calciumsulfoaluminatzement,
   ii) ein Calciumsulfat-Bindemittel ausgewählt aus Calciumsulfat-Hemihydrat und/oder Calciumsulfat-Anhydrit und
   iii) einen oder mehrere Füllstoffe,
wobei die Menge an Füllstoff 30 bis 80 Gew.-% beträgt und die Gesamtmenge an Aluminat-Bindemittel und Calciumsulfat-Bindemittel 20 bis 70 Gew.-% beträgt, wobei das Gewichtsverhältnis von Aluminat-Bindemittel zu Calciumsulfat-Bindemittel im Bereich von 1:1 bis 1:5 liegt, wobei sich die Gewichtsangaben auf das Trockengewicht der Estrichzusammensetzung beziehen.

Der deutlichste Vorteil des erfindungsgemäßen Verfahrens gegenüber den Systemen nach dem Stand der Technik besteht in einer verbesserten Haftzugfestigkeit der Konstruktion (Haftung zwischen Estrich und Abdichtung, z.B. Membran) nach einer kurzen Aushärtungsdauer des Estrichs. Insbesondere werden gemäß der Erfindung bereits nach einer Aushärtezeit des Estrichs von nur 4h bzw. 24 h ausreichend hohe Haftzugfestigkeiten erreicht. Die frühen Festigkeitswerte steigen auch mit der Zeit an. Systeme nach dem Stand der Technik haben keine oder nur eine sehr geringe Haftzugfestigkeit nach einer Aushärtezeit der Spachtelmasse von nur 4h oder 24 h.

Dieser Effekt des erfindungsgemäßen Verfahrens ermöglicht es somit, Wartezeit bis zum nächsten Arbeitsschritt (z.B. im Bereich der Fertigteilbaustelle für Bäder) zu verringern. Diese Wartezeitverkürzung spart dem Anwender Geld und ermöglicht es, die Produktionskapazitäten zu erhöhen. Das Verfahren ermöglicht somit eine kurze Herstellungszeit und gleichzeitig eine verbesserte Haftung zwischen Estrich und Abdichtung.

Dieser und weitere Vorteile der Erfindung können wie folgt zusammengefasst werden:
- schnelle Trocknungseigenschaften für den Estrich, mehr oder weniger unabhängig von der Temperatur (insbesondere bei niedrigen Temperaturen)
- signifikante Haftzugfestigkeit nach kurzen Aushärtezeiten der Estrichmasse zwischen Estrich und Abdichtung, insbesondere Membran
- Haftzugfestigkeiten sind mehr oder weniger unabhängig von der Schichtdicke des Estrichs
- die Trocknungs- bzw. Härtungsdauer der Estrichmasse ist weitgehend unabhängig von der Schichtdicke. Es besteht nahezu keinen Unterschied für die Trocknungszeit, egal ob der Estrich in einer Schichtdicke von 5 mm oder von 50 mm aufgebracht wird, was sehr vorteilhaft ist, da dies hohe Schichtdicken ohne wesentliche Verlängerung der Trocknungszeiten ermöglicht
- für die erzielten Ergebnisse ist die Art des Klebers zum Verkleben einer Bahnenware (z.B. Schönox^{®} AB) als Abdichtung wenig relevant; sowohl dispersionsbasierte Kleber (z.B. Schönox^{®} HA) als auch pulverbasierte Kleber (z.B. Schönox^{®} iFix) können eingesetzt werden, wobei pulverbasierte Kleber schneller trocknen (Schönox-Produkte sind von der Sika Schweiz AG). Auch andere Kleber wie Fliesenkleber sind geeignet.
- niedriger CO2-Fußabdruck im Vergleich zu klassischen ternär basierten Bindemittelsystemen

### Wege zur Ausführung der Erfindung

Das erfindungsgemäße Verfahren umfasst als Schritt a) das Vermischen einer Estrichzusammensetzung mit Wasser unter Bildung einer Estrichmasse.

Die Estrichzusammensetzung ist insbesondere eine feste Estrichzusammensetzung, z.B. in Form eines Pulvers. Die Estrichzusammensetzung ist insbesondere eine trockene

Estrichzusammensetzung.

Die im erfindungsgemäßen Verfahren eingesetzte Estrichzusammensetzung umfasst
i) ein Aluminat-Bindemittel ausgewählt aus Calciumaluminatzement und/oder Calciumsulfoaluminatzement,
ii) ein Calciumsulfat-Bindemittel ausgewählt aus Calciumsulfat-Hemihydrat und/oder Calciumsulfat-Anhydrit und
iii) einen oder mehrere Füllstoffe.

Das Aluminat-Bindemittel ist Calciumaluminatzement und/oder Calciumsulfoaluminatzement. Das Aluminat-Bindemittel ist bevorzugt Calciumsulfoaluminatzement. Das Aluminat-Bindemittel ist ein hydraulisches Bindemittel.

Gemäß einer Ausführungsform enthält das Aluminat-Bindemittel mindestens einen Calciumaluminatzement (CAC). Ein Calciumaluminatzement (CAC) ist gemäß der vorliegenden Erfindung insbesondere ein Zement, umfassend einen Klinker, der hydraulische Calciumaluminate umfasst, wobei die Hauptphase bevorzugt CA (C: CaO; A: Al₂O₃) ist. Andere Calciumaluminate, wie z.B. C₂A, C₃A, C₁₂A₇, sind typischerweise ebenfalls vorhanden. CAC für die vorliegende Erfindung können typischerweise auch andere Phasen, ausgewählt aus Gehlenit (C₂AS mit C: CaO, A: Al₂O₃, S: SiO₂), Perovskit (CT mit C: CaO, T: TiO₂), Belit (C₂S mit C: CaO, S: SiO₂), Tricalciumsilicat, Ferriten (C₂F, C₂AF, C₄AF mit C: CaO; A: Al₂O₃; F: Fe₂O₃), Ternesit (C₅S₂$ mit C: CaO, S: SiO₂; $: SO₃) und Aluminumoxid, enthalten. CAC der vorliegenden Erfindung können ferner Calciumcarbonat enthalten. Insbesondere entspricht ein CAC der vorliegenden Erfindung bevorzugt der Norm EN 14647. CAC, die in anderen Normen beschrieben werden, z.B. ASTM oder chinesische Normen, sind in gleicher Weise geeignet. Geeignete CAC können z.B. kommerziell von Royal White Cement bezogen werden.

Gemäß einer Ausführungsform enthält das Aluminat-Bindemittel mindestens einen Calciumsulfoaluminat (CSA)-zement. Ein CSA-zement ist gemäß der vorliegenden Erfindung insbesondere ein Zement, umfassend einen Klinker, der C₄(A₃₋ₓFₓ)$ (C: CaO; A: Al₂O₃; F: Fe₂O₃; $: SO₃), wobei x eine ganze Zahl von 0 - 3 ist, umfasst. CSA für die vorliegende Erfindung können typischerweise weitere Phasen enthalten, die ausgewählt sind aus Aluminaten (CA, C₃A, C₁₂A₇, mit C: CaO; A: Al₂O₃), Belit (C₂S, mit C: CaO, S: SiO₂), Ferriten (C2F, C2AF, C4AF, mit C: CaO; A: Al₂O₃; F: Fe₂O₃), Ternesit (C₅S₂$ mit C: CaO, S: SiO₂; $: SO₃) und Anhydrit. In bestimmten Ausführungsformen der Erfindung enthält der CSA 15-75 Gew.-% C₄A₃$, 0-10 Gew.-% Aluminate, 0-70 Gew.-% Belit, 0-35 Gew.-% Ferrite, 0-20 Gew.-% Ternesit und 0-25 Gew.-% Anhydrit, jeweils bezogen auf das Gesamttrockengewicht des CSA-Zements. Gegebenenfalls enthaltenes Anhydrit ist Bestandteil des CSA-Zements und diesem zuzurechnen. Geeignete CSA können z.B. unter dem Handelsnamen Calumex von Caltra B.V. bezogen werden.

Das Calciumsulfat-Bindemittel ist ein hydraulisches Bindemittel. Das Calciumsulfat-Bindemittel ist ausgewählt aus Calciumsulfat-Hemihydrat (CaSO₄ · ½ H₂O) und/oder Calciumsulfat-Anhydrit (CaSO₄), wobei Calciumsulfat-Hemihydrat bevorzugt ist. Calciumsulfat-Anhydrit ist wasserfreies Calciumsulfat (kein Kristallwasser). Calciumsulfat-Hemihydrat umfasst alpha-Calciumsulfat-Hemihydrat und beta-Calciumsulfat-Hemihydrat, wobei alpha-Calciumsulfat-Hemihydrat bevorzugt ist.

In Bezug auf die Calciumsulfat-Bindemittel ist es bevorzugt, wenn es im Wesentlichen oder vollständig aus Calciumsulfat-Hemihydrat besteht, da ein zu hoher Anteil an Anhydrit zu einer zu schnellen Wasseraufnahme durch den Anhydritbestandteil führt, was die Verarbeitbarkeit der Zusammensetzung beeinträchtigen kann. Infolge dessen ist es bevorzugt, wenn von der Gesamtmenge an Calciumsulfat-Bindemittel mindestens 80 Gew.-%, bevorzugt mindestens 90 Gew.-%, und besonders bevorzugt mindestens 95 Gew.-% auf das Calciumsulfat-Hemihydrat entfallen (Rest Calciumsulfat-Anhydrit).

Calciumsulfat-Dihydrat (CaSO₄ · 2 H₂O) ist nicht in der Lage, Wasser zu binden, und fällt daher hier nicht unter das Calciumsulfat-Bindemittel. In der Estrichzusammensetzung kann aber gegebenenfalls auch Calciumsulfat-Dihydrat enthalten sein. Calciumsulfat-Dihydrat kann als sogenannter Anreger ("nucleating agent") dienen und bewirkt eine schnellere Reaktion des Calciumsulfat-Halbhydrates. Die Estrichzusammensetzung umfasst daher bevorzugt Calciumsulfat-Dihydrat.

Die Estrichzusammensetzung enthält ferner einen oder mehrere Füllstoffe, die auch als Aggregate bezeichnet werden. Dabei kann es sich um jedes feste Material handeln, das bezüglich der Hydratationsreaktion des hydraulischen Binders nicht reaktiv ist. Als Füllstoffe bzw. Aggregate können die dem Fachmann auf dem Gebiet bekannten Stoffe eingesetzt werden. Beispiele für Füllstoffe bzw Aggregate sind Gestein, Schotter, Kies, Schlacke, gemahlenes Gestein, recyclierte Gesteinskörnung, Recyclingbeton, Sand, wie Quarzsand oder Flusssand, gemahlenes Gestein, Glas, Blähglas, Hohlglasperlen, Glaskeramik, Vulkangestein, Bimsstein, Perlit, Vermiculit, Porzellan, elektrogeschmolzene oder gesinterte Schleifmittel, Brennhilfsmittel, Siliciumdioxid-Xerogele, Carbonate, wie gemahlener Kalkstein, gemahlener Dolomit und Kreide, und/oder gemahlenes Aluminiumoxid.

Es können feste Materialien verwendet werden, für die nach (Wieder)verwertungsmöglichkeiten gesucht wird. Beispiele für solche Füllstoffe bzw. Aggregate sind:
(i) Materialien biologischen Ursprungs, bevorzugt pflanzlichen Ursprungs, insbesondere Materialien pflanzlichen Ursprungs, die im Wesentlichen aus Cellulose und/oder Lignin bestehen.
(ii) synthetische nicht-mineralische Materialien, vorzugsweise ausgewählt aus thermoplastischen oder duroplastischen Kunststoffen, Elastomeren, Kautschuken, Textilfasern, mit Glas- oder Kohlenstofffasern verstärkten Kunststoffmaterialien
(iii) anorganische Aggregate aus dem Rückbau von Bauwerken des Hoch- und Tiefbaus, vorzugsweise ausgewählt aus Betonabfällen, Mörtel, Ziegel, Naturstein, Asphalt, Fliesen, Kacheln, Porenbeton, Klinker, Metallschrott
(iv) organische Aggregate aus dem Recycling von Industrieprodukten, insbesondere schwer zu recycelnde Verbundwerkstoffe, insbesondere recycelte Dämmstoffe.
(v) gesundheitlich unbedenkliche körnige Materialien, die üblicherweise zur Deponierung bestimmt sind, wie z.B. gebrauchte Gießereisande, Katalysatorträger, Klinkerzuschläge, Füllstoffe aus der Behandlung von Aushubschlamm, Klärschlamm, Gülle, Papierabfälle, Papierverbrennungsaschen, Hausmüllverbrennungsaschen.

In einer bevorzugten Ausführungsform umfassen der bzw. die Füllstoffe bzw. Aggregate Sand und/oder carbonatische Füllstoffe, bevorzugt in Form von Calciumcarbonat. Geeignete Sande sind zum Beispiel in den Normen ASTM C778 oder EN 196-1 beschrieben. Calciumcarbonat umfasst auch Kalkstein und Kreide. Der Sand kann insbesondere Quarzsand oder Flusssand sein.

Ein geeigneter Quarzsand weist z.B. eine Sieblinie im Bereich von etwa 0 bis 0,5 mm, bevorzugt im Bereich von etwa 0,08 bis 0,4 mm, auf. Ein weiterer geeigneter Quarzsand weist z.B. eine Partikelgröße im Bereich von etwa 0,1 bis 1 mm, bevorzugt von etwa 0,2 bis 0,8 mm auf.

Ein geeignetes Calciumcarbonat weist z.B. einen mittleren Teilchendurchmesser im Bereich von 2,5 µm und eine Kornlinie mit Rückstandsfreiheit von etwa 40 µm auf. Ein geeignetes Kalksteinmehl weist z.B. eine Feinheit von < 0,1 mm auf.

Im Folgenden beziehen sich auf die Estrichzusammensetzung bezogene Gewichtsangaben auf das Trockengewicht der Estrichzusammensetzung, sofern nicht anders angegeben.

Die Gesamtmenge an Aluminat-Bindemittel und Calciumsulfat-Bindemittel in der Estrichzusammensetzung beträgt 20 bis 70 Gew.-%, bevorzugt 24 bis 55 Gew.-%, bevorzugter 24 bis 35 Gew.-%.

Das Gewichtsverhältnis von Aluminat-Bindemittel zu Calciumsulfat-Bindemittel in der Estrichzusammensetzung liegt im Bereich von 1:1 bis 1:5, bevorzugt im Bereich von 1:1,6 bis 1:4, bevorzugter 1:2 bis 1:3,5. Besonders bevorzugt liegt das Gewichtsverhältnis von Aluminat-Bindemittel zu Calciumsulfat-Bindemittel im Bereich von 1:2,1 bis 1:3.

Die Menge an Füllstoff in der Estrichzusammensetzung beträgt 30 bis 80 Gew.-%, bevorzugt 35 bis 75 Gew.-%.

In einer bevorzugten Ausführungsform umfasst die Estrichzusammensetzung:
i) 5 bis 15 Gew.-% des Aluminat-Bindemittels,
ii) 15 bis 40 Gew.-%, bevorzugt 15 bis 30 Gew.-%, des Calciumsulfat-Bindemittels und
iii) 50 bis 75 Gew.-% des oder der Füllstoffe.

Die Estrichzusammensetzung kann neben den Füllstoffen ferner ein oder bevorzugt mehrere weitere Additive enthalten.

In einer bevorzugten Ausführungsform umfasst die Estrichzusammensetzung ferner mindestens ein Polyol mit einer Funktionalität von 4 oder kleiner und einer Dichte an OH-Gruppen von mindestens 0,033 mol OH pro g Polyol. Ein Polyol weist mindestens 2 Hydroxygruppen auf. Das mindestens eine Polyol ist bevorzugt Glycerin und/oder Erythritol, bevorzugt Erythritol. Bevorzugt wird nur ein solches Polyol verwendet.

Es ist bekannt, dass auch auf binäre oder ternäre Bindemittel basierende Zusammensetzungen während des Abbinde- und Trocknungsprozesses gewöhnlich einer Schwindung unterworfen sind. Ein solches Schwinden ist für die Gebrauchstauglichkeit nachteilig, da sie z.B. häufig die Ursache für die Bildung von Rissen oder die Aufwölbung von Estrichen sein kann. Es hat sich herausgestellt, dass die Verwendung mindestens eines vorgenannten Polyols zu einer besonders großen Verringerung der Schwindung führt.

Das mindestens ein Polyol, bevorzugt Glycerin und/oder Erythritol, ist bevorzugt in einer Menge von 0,5 Gew.-% bis 10 Gew.-%, bevorzugter 1,2 Gew.-% bis 6,5 Gew.-%, bezogen auf das Gewicht des Aluminat-Bindemittels, enthalten. Es hat sich herausgestellt, dass die Verringerung des Schwindens bei solchen Dosiermengen von Polyol besonders ausgeprägt ist.

In einer bevorzugten Ausführungsform umfasst die Estrichzusammensetzung ferner mindestens ein Lithiumsalz, das die Härtung der Zusammensetzung beschleunigt. Geeignete Lithiumsalze sind z.B. Lithiumsulfat und Lithiumhalogenide, insbesondere Lithiumchlorid, sowie Lithiumcarbonat. Am meisten bevorzugt ist Lithiumcarbonat.

Das Lithiumsalz, insbesondere Lithiumcarbonat oder Lithiumsulfat, ist bevorzugt in einer Menge von 0,001 bis 0,5 Gew.-%, bevorzugter 0,005 bis 0,05 Gew.-%, in der Estrichzusammensetzung enthalten. Bei weniger als 0,001 % ist die Konzentration in der Regel zu gering, um eine merklich beschleunigende Wirkung zu vermitteln, während ein Zusatz von mehr als 0,5 Gew.-% zu einer zu schnellen Härtung der Zusammensetzung führen kann.

In einer bevorzugten Ausführungsform enthält die Estrichzusammensetzung ferner Weinsäure und/oder ein Weinsäuresalz, bevorzugt ein Alkalimetallsalz der Weinsäure, bevorzugt in einer Menge von 0,15 bis 0,005 Gew.-%, bevorzugter 0,1 bis 0,01 Gew.-%, besonders bevorzugt 0,08 bis 0,015 Gew.-%. Bevorzugt ist Natrium- oder Kaliumtartrat oder das Mischsalz Natrium/Kaliumtartrat.

Der Zusatz von Weinsäure und/oder einem Weinsäuresalz hat positive Auswirkungen auf das Expansionsverhalten der Estrichzusammensetzung, indem eine zu starke Expansion des Materials unterdrückt werden kann. Um einen entsprechenden Effekt zu erzielen, werden im Allgemeinen mindestens 0,005 Gew.-% eingesetzt, während mehr als 0,15 Gew.-% zu einer zu starken Verzögerung der Abbindung führen können.

In einer besonders bevorzugten Ausführungsform enthält die Estrichzusammensetzung alle der vorstehend genannten Additive. Die Estrichzusammensetzung kann noch weitere übliche zusätzliche Additive enthalten, z.B. Fließmittel, Verdickungsmittel, Farbstoffe und/oder Farbpigmente, Entschäumer, Stabilisierungsmittel, Härtungsverzögerer und/oder Flexibilisierungsmittel. Die Gesamtkonzentration solcher zusätzlichen Additive liegt zweckmäßig im Bereich von etwa 0,1 und 10 Gew.-%, bevorzugt etwa 0,5 und 5 Gew.-%, bevorzugter etwa 1 und 3 Gew.-%.

Beispiele für geeignete Farbpigmente sind Eisenoxide. Beispiele für geeignete Flexibilisierungsmittel sind organische Polymere, z.B. auf Basis von Vinylacetat und Ethylen, die z.B. als Vinnapas^{®}5025 L von Wacker erhältlich sind. Geeignete Stabilisierungsmittel sind z.B. Hydroxyethylcellulosen, die z.B. als Tylose^{®}H 20 P2 von ShinEtsu SE Tylose GmbH & Co. KG erhältlich sind. Geeignete Verdickungsmittel sind z.B. Methylcellulosen, die beispielsweise unter dem Handelsnamen Culminal^{®} vertrieben werden. Zudem kann es zweckmäßig sein, als Fließmittel einen "Superplasticizer" zuzusetzen, z.B. ein Polycarboxylatether (PCE). Ein geeigneter Verzögerer ist z.B. unter dem Handelsnamen Retardan^{®} P von der Sika Schweiz AG erhältlich. Weitere geeignete Verzögerer sind Natriumgluconat, oder Natriumeitrat. Ein geeigneter Entschäumer ist z.B. Foamstar^{®}PB1922 von BASF.

Die Estrichzusammensetzung kann ferner Portlandzement enthalten, das ist aber im Allgemeinen nicht bevorzugt. Die Estrichzusammensetzung kann z.B. bis zu 5 Gew.- %, bevorzugt nicht mehr als 3 Gew.-%, bevorzugter nicht mehr als 1 Gew.-%, insbesondere nicht mehr als etwa 0,1 Gew.-% an Portlandzement enthalten. Die Estrichzusammensetzung ist aber bevorzugt frei von Portlandzement. Die Estrichzusammensetzung ist auch bevorzugt frei von anderen Aktivatoren, insbesondere Calciumhydroxid, Natriumhydroxid, Kaliumhydroxid, Alkaliwassergläsern und Mischungen davon. Solche Aktivatoren, insbesondere Portlandzement, wirken als Basen und beeinflussen den pH-Wert.

Die Mengen der einzelnen Bestandteile in der Estrichzusammensetzung können auch von der Art der Applikation und der aufgetragenen Schichtdicke abhängen. Folgende bevorzugten Ausführungsformen können diesbezüglich angeführt werden, für die insbesondere auch die vorstehend angeführten Gewichtsverhältnisse von Aluminat-Bindemittel zu Calciumsulfat-Bindemittel gelten:
- für eine Schichtdicke des Estrichs von 3 mm oder mehr, insbesondere 20 mm oder mehr oder 60 mm oder mehr, bevorzugt 3 bis 100 mm, z.B. 10 bis 75 mm, ist in der Estrichzusammensetzung bevorzugt die Gesamtmenge an Aluminat-Bindemittel und Calciumsulfat-Bindemittel im Bereich von etwa 20 bis 45 Gew.-%, insbesondere etwa 24 bis 39 Gew.-%, und die Menge eines oder mehrerer Füllstoffe etwa 50 bis 80 Gew.-%, bevorzugt etwa 55 bis 75 Gew.-%.
- für eine dünne Schicht des Estrichs mit einer Schichtdicke von weniger als 10 mm, z.B. im Bereich von 3 bis 6 mm, ist in der Estrichzusammensetzung bevorzugt die Gesamtmenge an Aluminat-Bindemittel und Calciumsulfat-Bindemittel im Bereich von 45 bis 70 Gew.-%, bevorzugt 50 bis 60 Gew.-%, und die Menge eines oder mehrerer Füllstoffe im Bereich von etwa 30 bis 50 Gew.-%, bevorzugt 40 bis 45 Gew.-%.

Eine vorteilhafte Ausführungsform der erfindungsgemäßen Estrichzusammensetzung enthält
5 bis 20 Gew.-% Aluminat-Bindemittel,
15 bis 50 Gew.-% Calciumsulfat-Hemihydrat,
5 bis 12 Gew.-% Calciumcarbonat als Füllstoff,
30 bis 70 Gew.-% Quarzsand,
0,01 bis 0,10 Gew.-% Kaliumnatriumtartrat,
0,005 bis 0,5 Gew.-% Lithiumsalz, insbesondere Lithiumcarbonat oder Lithiumsulfat.

Die Estrichzusammensetzungen der vorliegenden Erfindung sind insbesondere trockene Zusammensetzungen. Der Gehalt an Wasser in Estrichzusammensetzungen der vorliegenden Erfindung ist gewöhnlich kleiner 3 Gew.-%, bevorzugt kleiner 2 Gew.-%, mehr bevorzugt kleiner 1 Gew.-%, jeweils bezogen auf die gesamte Masse der Estrichzusammensetzung. Solche trockenen Estrichzusammensetzungen haben eine verbesserte Lagerstabilität.

In Schritt a) eines erfindungsgemässen Verfahrens wird die Estrichzusammensetzung, gewöhnlich vor Ort, mit Wasser vermischt, um eine Estrichmasse zu erhalten, die auch als Estrichmörtel bezeichnet wird. Die frischen Estrichmassen können fließfähig oder pastös sein.

In einer Ausführungsform kann die Estrichmasse selbstverlaufend sein, d.h. die Estrichzusammensetzung ist bzw. bildet einen Fließestrich. In einer bevorzugten Ausführungsform ist bzw. bildet die Estrichzusammensetzung einen Gefälle-Estrich, d.h. der Estrich selbst bzw. die von ihm gebildete Oberfläche kann mit einer Neigung versehen werden. Dies ist insbesondere in Feuchträumen, wie z.B. Badezimmern, von Vorteil. Die Estrichzusammensetzung ist ferner bevorzugt ein Verbundestrich, d.h. er ist fest mit dem darunterliegenden Substrat verbunden. Gefälle-Estriche sind insbesondere Verbundestriche.

Da die Estrichzusammensetzung hydraulische Bindemittel in Form von Aluminat-Bindemittel und Calciumsulfat-Bindemittel enthält, finden nach der Zugabe von Wasser bekanntlich Hydratationsreaktionen statt. Durch Trocknen bzw. Abbinden findet mit der Zeit eine Aushärtung der Estrichmasse statt. Die weitere Verarbeitung hat naturgemäß vor der Aushärtung zu erfolgen, wenn die Estrichmasse noch fließfähig oder pastös ist.

Die Konsistenz bzw. das rheologische Verhalten der Estrichmasse kann neben der Wahl der eingesetzten Additive insbesondere auch durch das Mischverhältnis von Estrichzusammensetzung und Wasser eingestellt werden. Es ist bevorzugt, die Estrichzusammensetzung mit Wasser in einem Massenverhältnis von Wasser zu Estrichzusammensetzung im Bereich von 0,08 bis 0,40, bevorzugt 0,10 bis 0,30, insbesondere 0,11 bis 0,20, zu mischen, um eine fließfähige oder pastöse Estrichmasse zu erhalten. Vorzugsweise ist die Estrichmasse pumpfähig, was den Transport erleichtert.

Es hat sich gezeigt, dass der Estrich bei verschiedenen Mischverhältnis von Estrichzusammensetzung und Wasser relativ konstante bauphysikalische Eigenschaften aber auch Festigkeiten entwickelt. Es ist also beispielsweise möglich, unterschiedliche Konsistenzen der Estrichmasse einzustellen und dennoch gleichbleibende bauphysikalische Eigenschaften und/oder Festigkeiten zu erhalten. Dies ermöglicht dem Anwender eine besondere Flexibilität.

Das erfindungsgemäße Verfahren umfasst als Schritt b) das Aufbringen der Estrichmasse auf das Substrat. Die Art der Aufbringung kann naturgemäß von der Konsistenz der Estrichmasse abhängen. Die Aufbringung kann mit allen dem Fachmann bekannten Mitteln erfolgen, z.B. mittels Kelle, Pinsel oder Rolle, durch Gießen oder mittels Spritz- oder Sprühverfahren. Die Estrichmasse kann in einem Schritt vollständig aufgebracht werden oder sie kann in zwei oder mehreren aufeinanderfolgenden Schritten in mehrere übereinanderliegenden Schichten aufgetragen werden. Durch Auftragen in mehreren Schichten kann eine höhere Gesamtschichtdicke erreicht werden.

Das Substrat, auf das die Estrichzusammensetzung aufgebracht wird, unterliegt keinen Beschränkungen. Es ist bevorzugt, dass der Estrich nach dem Trocknen fest auf dem Substrat haftet, d.h. einen Verbundestrich bildet.

Beispiele für geeignete Substrate sind Substrate aus Beton, Bodenbeläge, wie Holzdielenböden, festliegendes Parkett, Holzspanplatten, Holz-Zement-Platten, Altuntergründe mit keramischen Belägen, Altuntergründe auf der Basis von Estrichen oder Beton. Das Substrat ist bevorzugt ein Betonsubstrat.

Das Substrat kann vor dem Aufbringen der Estrichmasse gegebenenfalls mit einer Grundierung versehen werden. Die Grundierung, auch als Primer bezeichnet, wird dabei auf das Substrat aufgetragen. Eine solche Vorbehandlung ist dem Fachmann bekannt.

Nach dem Auftragen der Estrichmasse lässt man in Schritt c) eines erfindungsgemässen Verfahrens die Estrichmasse trocknen. Dies geschieht in der Regel unter den gegebenen Umgebungsbedingungen. Gegebenenfalls kann die Trocknung durch erhöhte Luftzirkulation, z.B. Zugluft, oder erhöhte Temperaturen unterstützt werden. Die Estrichmasse kann bei verschiedenen Temperaturen trocknen, z.B. im Bereich von 4°C bis 50°C, bevorzugt 5°C bis 35°C.

Durch das Trocknen ergibt sich ein abgetrockneter Estrich, der mit der Zeit immer mehr abbindet bzw. aushärtet. Die Trocknungsdauer, um einen für die Weiterverarbeitung geeigneten abgetrockneten Estrich zu erhalten, hängt u.a. von der Zusammensetzung der Estrichzusammensetzung und den Umgebungsbedingungen ab. Ein abgetrockneter Estrich, der weiterverarbeitet werden kann, wird allgemein als belegreifer Estrich bezeichnet. Wichtige Parameter hierfür sind die erreichte Festigkeit und Restfeuchte des Estrichs.

Ein besonderer Vorteil des erfindungsgemäßen Verfahrens besteht darin, dass bereits nach einer relativ kurzen Trocknungsdauer eine Weiterverarbeitung möglich ist bzw. Belegreife erreicht wird. Insbesondere kann selbst bei frühzeitiger Aufbringung der Abdichtung eine ausreichend hohe Haftung zwischen Estrich und Abdichtung erhalten werden.

In einer bevorzugten Ausführungsform beträgt die Dauer der Trocknung der Estrichmasse gemäß Schritt c) bis zur Belegreife oder bis zum Aufbringen der Abdichtung nicht mehr als 24 Stunden, bevorzugt weniger als 10 Stunden, bevorzugter im Bereich von 3 bis 8 Stunden, besonders bevorzugt 4 bis 6 Stunden.

Gemäß Schritt d) des erfindungsgemäßen Verfahrens erfolgt nach der Trocknung gemäß Schritt c) das Aufbringen einer Abdichtung auf den abgetrockneten Estrich. Die Abdichtung stellt eine Sperre dar, die das Eindringen von Wasser oder Feuchtigkeit in die darunterliegenden Teile der Bodenkonstruktion verhindert. Es handelt sich somit um eine wasserdichte Abdichtung. Die wasserdichte Abdichtung kann durch aufgeklebte bahnenförmige oder plattenförmige Membranen oder durch in fließfähiger oder pastöser Form aufgebrachte und sich verfestigende Dichtungsstoffe gebildet werden. In beiden Fällen ist die Abdichtung insbesondere mit dem darunterliegenden Estrich haftend verbunden. Geeignete Systeme werden z.B. insbesondere in der DIN EN 14891 beschrieben.

Der abgetrocknete Estrich kann vor der Aufbringung der Abdichtung gegebenenfalls mit einer Grundierung versehen werden.

In einer Variante erfolgt das Aufbringen einer Abdichtung gemäß Schritt d1) durch Aufkleben einer bahnenförmigen oder plattenförmigen Membran auf den abgetrockneten Estrich mittels eines Klebers. Die bahnenförmige oder plattenförmige Membran ist bevorzugt in Form einer Bahn, die z.B. als Rollenware erhältlich ist. Es versteht sich, dass bei größeren Flächen in der Regel mehrere Bahnen oder Platten der Membran nebeneinander aufgeklebt werden.

Die bahnenförmige oder plattenförmige Membran kann eine ein oder mehrschichtige Folie umfassen. Die bahnenförmige oder plattenförmige Membran umfasst bevorzugt eine ein- oder mehrschichtige Kunststofffolie. Solche Membranen werden auch als bahnenförmige oder plattenförmige Kunststoffmembran bezeichnet.

Die bahnenförmige oder plattenförmige Membran kann z.B. eine ein oder mehrschichtige Kunststofffolie, insbesondere thermoplastische Kunststofffolie, umfassen, wobei es sich bevorzugt um eine Polyethylenfolie handelt. Daraus resultiert eine hohe Widerstandsfähigkeit gegenüber Umwelteinflüssen. Die Kunststofffolie kann auch als Kunststoffschicht bezeichnet werden. Die Kunststofffolie wird insbesondere auch als Schottschicht bezeichnet. Sie bewirkt insbesondere die Wasserundurchlässigkeit der Membran.

Vorzugsweise ist die Kunststofffolie aus Polyethylen mit hoher Dichte (HDPE), Polyethylen mit mittlerer Dichte (MDPE), Polyethylen mit tiefer Dichte (LDPE), Polyethylen (PE), Polyethylenterephthalat (PET), Polystyrol (PS), Polyvinylchlorid (PVC), Polyamide (PA), Ethylen-Vinylacetat (EVA), chlorsulfoniertes Polyethylen, Thermoplastische Polyolefine (TPO), Ethylen-Propylen-Dien-Kautschuk (EPDM) und Mischungen davon gebildet.

Diese Kunststofffolien oder-schichten bzw. Schottschichten können z.B. eine Dicke von 0,1 - 5 mm, insbesondere 0,3 - 2.5 mm, bevorzugt 0,4 - 1,5 mm, aufweisen.

Die bahnenförmige oder plattenförmige Membran kann neben der ein- oder mehrschichtigen Kunststofffolie (Schottschicht) ferner auch eine oder mehrere textile Flächenkörper umfassen, z.B. ein Gewebe, Gelege, Gewirke oder ein Vlies, die zur Verstärkung und/oder zur besseren Anbindung in die Bodenkonstruktion dienen. Solche textilen Flächenkörper werden auch als Verbundschicht bezeichnet. Der textile Flächenkörper ist aus Fasern gebildet, die aus organischem oder synthetischem Material sein können. Es handelt sich z.B. um Zellulose-, Baumwollfasern, Proteinfasern oder um synthetische Fasern, wie z.B. Fasern aus Polyester oder aus einem Homo- oder Copolymeren von Ethylen und/oder Propylen oder aus Viskose.

In einer bevorzugten Ausführungsform umfasst die bahnenförmige oder plattenförmige Membran mindestens eine Kunststofffolie (Schottschicht) und mindestens einen textilen Flächenkörper (Verbundschicht). In einer bevorzugten Ausführungsform umfasst die Membran eine Polyethylenfolie mit beidseitiger Vlieskaschierung mit einer Dicke von etwa 0,5 mm.

Als bahnenförmige oder plattenförmige Membranen eignen sich z.B. Abdichtbahnen basierend auf einem Vlies- oder Gewirke-Träger, auf den eine Schottschicht vollflächig oder streifenweise aufgebracht ist. Varianten umfassen Abdichtbahnen, bei denen eine Schottschicht zwischen zwei textile Flächenkörper, z.B. Vlies-Träger, platziert ist oder bei denen sich auf der einen Seite der Schottschicht ein textiler Flächenkörper und auf der anderen Seite eine selbstklebende Komponente befindet.

Die bahnenförmige oder plattenförmige Membran wird mittels eines Klebers auf den abgetrockneten Estrich aufgebracht, wodurch der Verbund zwischen Estrich und Membran erreicht wird. Der Kleber wird im Allgemeinen auf den abgetrockneten Estrich aufgebracht, z.B. durch Rollen. Anschließend wird die bahnenförmige oder plattenförmige Membran darauf verlegt. Es können auch bahnenförmige oder plattenförmige Membranen eingesetzt werden, die eine Klebschicht umfassen und darüber direkt aufgeklebt werden können.

Als Kleber können übliche, dem Fachmann bekannte Kleber eingesetzt werden. Als Kleber eignen sich z.B. Polymerdispersionen, insbesondere Acrylpolymer-Dispersionen, auf Pulver basierende Dispersionen, wie auf Pulver basierende Polymerdispersionen, insbesondere auf Pulver basierende Acrylatdispersionen, Polyurethan-Kleber oder Fliesenkleber. Der Kleber kann ein einkomponentiger oder mehrkomponentiger, z.B. zweikomponentiger, Kleber sein. Der Kleber ist bevorzugt ein wässriger Dispersionskleber.

Geeignete Kleber sind z.B. Acrylpolymer-Dispersionskleber, Polyurethan-Dispersionskleber oder Dispersionskleber, die Polyurethan und ein Copolymer von Ethylen, Vinylacetat und gegebenenfalls (Meth)acrylat enthalten.

Der Fliesenkleber kann zementös oder polymer gebunden sein (Zementkleber oder Dispersionskleber). Geeignete Fliesenkleber sind z.B. wie in der Norm DIN EN 12004 angegeben.

Eine im Handel erhältliche Membran zur Abdichtung ist z.B. Schönox ^{®}AB von Sika Schweiz AG. Hierbei handelt es sich um eine Polyethylenfolie mit beidseitiger Vlieskaschierung mit einer Dicke von etwa 0,5 mm. Ein weiteres Beispiel für eine Membran ist Schönox^{®} WSF. Beispiele für geeignete Kleber sind z.B. Schönox iFix^{®} von Sika Schweiz AG, eine selbstvernetzende, acrylatbasierte Dispersion auf Pulverbasis, oder Schönox^{®} HA von Sika Schweiz AG, eine Polymerdispersion.

In einer zweiten Variante erfolgt das Aufbringen einer Abdichtung gemäß Schritt d2) durch Aufbringen eines fließfähigen oder pastösen Abdichtungsstoffes auf den abgetrockneten Estrich. Der aufzubringende fließfähige oder pastöse Abdichtungsstoff wird gewöhnlich auch als flüssig zu verarbeitende Abdichtung bezeichnet.

Nach Auftrag verfestigt sich der Abdichtungsstoff und bildet eine Abdichtung. Die Verfestigung kann durch einen Trocknungsprozess und/oder einen Härtungsprozess stattfinden. Die Aushärtung kann durch Hydratationsreaktionen eines hydraulischen Bindemittels und/oder Vernetzungsreaktionen polymerer Verbindungen erfolgen. Der Abdichtungsstoff kann ein einkomponentiger oder mehrkomponentiger, z.B. zweikomponentiger, Abdichtungsstoff sein. Bei mehrkomponentigen Abdichtungsstoffen werden die Komponenten vor dem Auftrag miteinander vermischt.

Der Abdichtungsstoff wird bevorzugt ausgewählt aus einer Polymerdispersion, einem Dichtschlamm oder einem Reaktionsharz, wobei Polymerdispersionen, z.B. acrylatbasierte Dispersionen, und Dichtschlämme bevorzugt sind. Dichtschlämme werden auch als Dichtungsschlämme bezeichnet.

Der Abdichtungsstoff, insbesondere der Dichtschlamm, kann z.B. hydraulisches Bindemittel enthalten. In einer bevorzugten Ausführungsform enthält der Abdichtungsstoff, insbesondere der Dichtschlamm, mindestens ein hydraulisches Bindemittel und mindestens ein synthetisches Polymer. Beispiele für geeignete hydraulische Bindemittel sind Portlandzement, Aluminatzement, Calciumsulfoaluminatzement, Calciumsulfat (Anhydrit oder Hemihydrat), natürlicher hydraulischer Kalk, Schlacke, Puzzolane und Mischungen davon. Beispiele für geeignete synthetische Polymere sind Polymere oder Copolymere von Vinylacetat, Ethylen, Acrylat, Styrol und Butadien oder Polyurethane und Mischungen davon.

Der Abdichtungsstoff kann Bitumen enthalten, z.B. in Form einer Bitumenemulsion. Ein Beispiel ist ein Abdichtungsstoff, insbesondere Dichtschlamm, der hydraulisches Bindemittel, mindestens ein synthetisches Polymer und Bitumen umfasst, wobei Beispiele für hydraulische Bindemittel und synthetische Polymere vorstehend genannt wurden.

Polymerdispersionen enthalten synthetische Polymere, z.B. die vorstehend genannten, bevorzugt Polymere oder Copolymere von Acrylaten. Die Dispersion kann Wasser und/oder organische Lösungsmittel enthalten. Die Polymerdispersion kann selbstvernetzend sein.

Bei Einsatz von fließfähigen oder pastösen Abdichtungsstoffen kann vor deren Auftrag ein Kleber, z.B. einer der vorstehend beschriebenen, auf den abgetrockneten Estrich aufgebracht werden, um eine bessere Haftung zu erreichen. Das ist in der Regel aber nicht erforderlich.

Beispiele für geeignete fließfähige oder pastöse Abdichtungsstoffe sind Schönox^{®}1K DS von Sika Schweiz AG, ein zementhaltiger Dichtschlamm, oder Schönox^{®}2K DS von Sika Schweiz AG, eine selbstvernetzende, acrylatbasierte Dispersion.

In dem optionalen Schritt e) wird gegebenenfalls ein Bodenbelag auf die Abdichtung aufgebracht. Das Aufbringen eines Bodenbelags ist bevorzugt, insbesondere wenn zur Abdichtung eine bahnenförmige oder plattenförmige Membran eingesetzt wird.

Der Bodenbelag ist bevorzugt ein Fliesenbelag oder ein Plattenbelag, der auf übliche Weise auf die Abdichtung aufgeklebt werden kann. Die Fliesen oder Platten sind z.B. aus Keramik, Glas, Textilien, Kunststoffen, Metallen oder Naturstein. Als Beläge eignen sich auch kunststoffbasierte Beläge, insbesondere PVC-Beläge oder Bodenfliesen aus PVC (LVT, "Luxury Vinyl Tiles").

Die nach dem erfindungsgemäßen Verfahren erhaltene Bodenkonstruktion ist bevorzugt eine Fußbodenkonstruktion, insbesondere für den Innenraumbereich. Die Bodenkonstruktion bzw. Fußbodenkonstruktion eignet sich z.B. für Böden in Badezimmern, Duschräumen, Küchen, Schwimmbädern, Balkons, Terrassen oder Saunen, sie ist aber auch für Räume im Nicht-Nassbereich geeignet.

Der in der Bodenkonstruktion enthaltene Estrich weist bevorzugt eine Schichtdicke im Bereich von 3 bis 100 mm, bevorzugter 10 bis 75 mm, auf.

Ein besonderer Vorteil gemäß einer bevorzugten Ausführungsform ist, dass die Trocknungszeit des Estrichs im Wesentlichen unabhängig von der Schichtdicke des Estrichs ist, wobei die Schichtdicke bevorzugt im Bereich von 10 bis 75 mm liegt. Der technische Nutzen höherer Schichtdicken von z.B. mehr als 10 mm, bevorzugt mehr als 20 mm, besteht insbesondere darin, dass eine Tragfähigkeit der Bodenkonstruktion aufgebaut werden kann bzw. durch die Schichtdicke die Einstellung der Tragfähigkeit auf geforderte Werte ermöglicht werden kann.

Eine Trocknungszeit des Estrichs, die im Wesentlichen unabhängig von der Schichtdicke des Estrichs ist, bedeutet hier insbesondere, dass die Trocknungszeiten für einen Estrich für jede Schichtdicke im Bereich von 3 bis 100 mm, bevorzugt für jede Schichtdicke im Bereich von 10 bis 75 mm, bei ansonsten gleichen Bedingungen sich um nicht mehr als 15 min, bevorzugt nicht mehr als 5 min, bevorzugter um nicht mehr 1 min unterscheiden.

Die Trocknungszeit ist dabei die Zeit vom Aufbringen der Estrichmasse auf das Substrat bis zur Belegreife des Estrichs. Unter Belegreife versteht man allgemein, dass der Estrich auf die Gleichgewichtsfeuchte ausgetrocknet ist, d.h. dass sein Wassergehalt sich im Gleichgewicht mit der umgebenden Raumluft befindet. Der Wassergehalt bzw. die Restfeuchte lässt sich mit dem CM-Verfahren bestimmen.

Die Erfindung betrifft ferner eine Bodenkonstruktion, umfassend ein Substrat, einen über dem Substrat liegenden Estrich, eine über dem Estrich liegende Abdichtung, die eine aufgeklebte Membran oder eine in fließfähiger oder pastöser Form aufgebrachter und dann verfestigter Abdichtungsstoff ist, und gegebenenfalls ein über der Abdichtung liegender Bodenbelag, wobei der Estrich aus einer mit Wasser gemischten und gehärteten Estrichzusammensetzung gebildet ist, die umfasst
i) ein Aluminat-Bindemittel ausgewählt aus Calciumaluminatzement und/oder Calciumsulfoaluminatzement,
ii) ein Calciumsulfat-Bindemittel ausgewählt aus Calciumsulfat-Hemihydrat und/oder Calciumsulfat-Anhydrit und
iii) einen oder mehrere Füllstoffe,
wobei die Menge an Füllstoff 30 bis 80 Gew.-% beträgt und die Gesamtmenge an Aluminat-Bindemittel und Calciumsulfat-Bindemittel 20 bis 70 Gew.-% beträgt, wobei das Gewichtsverhältnis von Aluminat-Bindemittel zu Calciumsulfat-Bindemittel im Bereich von 1:1 bis 1:5 liegt, wobei sich die Gewichtsangaben auf das Trockengewicht der Estrichzusammensetzung beziehen.

Alle vorstehend gemachten Angaben für das erfindungsgemäße Verfahren gelten in gleicher Weise für die erfindungsgemäße Bodenkonstruktion, insbesondere hinsichtlich Estrichzusammensetzung, Substrat, Estrich, Abdichtung, bahnenförmige oder plattenförmige Membran, Kleber, Abdichtungsstoff und Bodenbelag, so dass darauf verwiesen wird.

Die erfindungsgemäße Bodenkonstruktion ist bevorzugt erhältlich nach dem erfindungsgemäßen Verfahren wie vorstehend beschrieben.

Die Erfindung wird nachfolgend anhand von Ausführungsbeispielen näher erläutert. Die Beispiele dienen zur Veranschaulichung und sollen die vorliegende Erfindung in keiner Weise einschränken.

### Ausführungsbeispiele

### Beispiel 1

Es wurde eine für das erfindungsgemäße Verfahren geeignete Estrichzusammensetzung aus den in der folgenden Tabelle 1 angegebenen Inhaltsstoffen hergestellt. Tabelle 1 gibt ferner die prozentualen Gewichtsanteile der Inhaltsstoffe, bezogen auf das Gewicht der Estrichzusammensetzung, an.

**Tabelle 1. Formulierung Estrichzusammensetzung**

| **Komponente** | **Funktion** | **Anteil, [Gew.-%]** |
|---|---|---|
| Calciumsulfoaluminatzement | Bindemittel | 7,660 |
| alpha-Calciumsulfat-Hemihydrat | Bindemittel | 19,940 |
| Kreide (feine Korngröße) | Füllstoff | 4,500 |
| Kalksteinmehl | Füllstoff | 5,0000 |
| Quarzsand, AFS-Zahl L50 | Füllstoff | 24,2100 |
| Calciumsulfat-Dihydrat | Anreger für das Hemihydrat | 0,7500 |
| Quarzsand 0,5-1,0mm | Füllstoff | 36,5000 |
| Vinylacetat-EthylenCopolymer | Redispersionspulver | 1,0000 |
| Hydroxyethylcellulose | Verdicker | 0,0530 |
| Lithiumcarbonat 99% | Beschleuniger | 0,0080 |
| Entschäumer | Entschäumer | 0,0750 |
| Kalium-Natrium-Tartrat | Verzögerer | 0,0370 |
| Natriumglukonat Pulver | Verzögerer | 0,0370 |
| Erythritol | Schwindreduzierer | 0,1900 |
| Polycarboxylatether | Hochleistungsfließmittel | 0,0300 |
| Stärkeether | Verdicker | 0,010 |

### Vergleichsbeispiele 1 und 2

Estrichzusammensetzungen (Trockenestriche), die für Bodenkonstruktionen mit Abdichtungen für Badezimmer geeignet sind, sind im Handel erhältlich. Die folgenden Handelsprodukte sind ternäre Bindemittelsysteme, die im gleichen Dickenbereich eingesetzt werden, und dienten als Vergleich:

| | | |
|---|---|---|
| Vergleichsbeispiel 1 | Schönox^{®} CLS | Sika Schweiz AG |
| Vergleichsbeispiel 2 | Centro^{®} GA#50 Speed | Centro Kakel och Klinker AB, Schweden |

### Beispiel 2

Mit den Estrichzusammensetzungen gemäß Beispiel 1 und den Vergleichsbeispielen 1 und 2 wurden Bodenkonstruktionen hergestellt.

Zur Herstellung der Estrichmasse wurden die Estrichzusammensetzungen gemäß Beispiel 1 und den Vergleichsbeispielen 1 und 2 mit Wasser vermischt. Für Beispiel 1 wurden 3,5 I Wasser pro 25 kg Zusammensetzung verwendet. Gemäß den Herstellerangaben wurden Schönox^{®} CLS 3,5 I Wasser pro 25 kg Zusammensetzung und für Centro^{®} GA#50 Speed 4,5 I Wasser pro 25 kg Zusammensetzung verwendet.

Zur Abdichtung wurde die Kunststoffmembran Schönox^{®}AB eingesetzt. Hierbei handelt es sich um eine Polyethylenfolie mit beidseitiger Vlieskaschierung mit einer Dicke von etwa 0,5 mm.

Als Kleber zum Verkleben der Abdichtung wurden eine selbstvernetzende, acrylatbasierte Dispersion auf Pulverbasis (Schönox iFix^{®}) oder eine Polymerdispersion (Schönox^{®} HA) verwendet.

Der Bodenaufbau erfolgte grundsätzlich wie folgt:
1. Als Substrat wurde eine trockene Betonplatte verwendet.
2. Die Betonplatte wurde mit einer Grundierung versehen: Primer Schönox^{®} VD (Mischverhältnis Primer zu Wasser: 1:3).
3. Die aus den Estrichzusammensetzungen gemäß Beispiel 1 und den Vergleichsbeispielen 1 und 2 hergestellten Estrichmassen wurden auf das grundierte Substrat in unterschiedlichen Schichtdicken aufgebracht.
4. Die aufgebrachte Estrichmasse wurde 4 Stunden oder 24 Stunden getrocknet (Trocknungszeit).
5. Nach 4 Stunden bzw. 24 Stunden Trocknungszeit der Estrichmasse wurde die Kunststoffmembran Schönox AB mit einem Kleber (Schönox iFix oder Schönox HA) auf die abgetrocknete Estrichmasse aufgeklebt.

Nach unterschiedlichen Aushärtungsdauern (z.B. nach 3 Tagen oder 7 Tagen) wurden Haftzugfestigkeiten an den erhaltenen Bodenkonstruktionen bestimmt. Lagerbedingungen: 20°C, 55% relative Luftfeuchtigkeit (Normalbedingungen). Die Ergebnisse sind in den Tabellen 2 bis 4 wiedergegeben.

Die Haftzugfestigkeit wurde in Anlehnung an DIN EN 13892-8 durchgeführt.

Die Tabellen 2a und 2b zeigen Haftfestigkeiten nach 3 Tagen Aushärtung für die verwendete Estrichzusammensetzung gemäß Beispiel 1 und den Vergleichsbeispielen für eine Trocknungszeit von 4 Stunden (Tabelle 2a) bzw. 1 Tag (Tabelle 2b) vor Applikation der Membran, Schichtdicke Estrich: 50 mm, Kleber: Schönox HA, Abdichtung: Schönox AB.

**Tabelle 2a. Trocknungszeit: 4 h, Dicke 50 mm, Aushärtung: 3 Tage**

| Estrichzusammensetzung | Haftfestigkeit [N/mm²] | Bruch |
|---|---|---|
| Beispiel 1 | 0,46 | zwischen Estrich und Kleber |
| Vergleichsbeispiel 1 | 0,16 | zwischen Estrich und Kleber |
| Vergleichsbeispiel 2 | - | Kleber hat sich abgelöst |

**Tabelle 2b. Trocknungszeit: 1 Tag, Dicke 50 mm, Aushärtung: 3 Tage**

| Estrichzusammensetzung | Haftfestigkeit [N/mm²] | Bruch |
|---|---|---|
| Beispiel 1 | 0,47 | zwischen Estrich und Kleber |
| Vergleichsbeispiel 1 | 0,23 | zwischen Estrich und Kleber |
| Vergleichsbeispiel 2 | - | Kleber hat sich abgelöst |

Die Tabellen 3a und 3b zeigen Haftfestigkeiten nach 7 Tagen Aushärtung für die verwendete Estrichzusammensetzung gemäß Beispiel 1 und den

Vergleichsbeispielen für eine Trocknungszeit von 4 Stunden (Tabelle 3a) bzw. 1 Tag (Tabelle 3b) vor Applikation der Membran, Schichtdicke Estrich: 50 mm, Kleber: Schönox HA, Abdichtung: Schönox AB.

**Tabelle 3a. Trocknungszeit: 4 h, Dicke 50 mm, Aushärtung: 7 Tage**

| Estrichzusammensetzung | Haftfestigkeit [N/mm²] | Bruch |
|---|---|---|
| Beispiel 1 | 0,60 | zwischen Estrich und Kleber |
| Vergleichsbeispiel 1 | 0,22 | zwischen Estrich und Kleber |
| Vergleichsbeispiel 2 | 0,08 | zwischen Estrich und Kleber |

**Tabelle 3b. Trocknungszeit: 1 Tag, Dicke 50 mm, Aushärtung: 7 Tage**

| Estrichzusammensetzung | Haftfestigkeit [N/mm²] | Bruch |
|---|---|---|
| Beispiel 1 | 0,89 | zwischen Estrich und Kleber |
| Vergleichsbeispiel 1 | 0,30 | zwischen Estrich und Kleber |
| Vergleichsbeispiel 2 | 0,39 | zwischen Estrich und Kleber |

Tabelle 4 zeigt Haftfestigkeiten nach 3 Tagen für die Estrichzusammensetzung gemäß Beispiel 1 für eine Trocknungszeit von 4 Stunden, Schichtdicke Estrich: 13 mm, Kleber: Schönox iFix.

**Tabelle 4. Trocknungszeit: 4 h, Dicke 13 mm, Aushärtung: 3 Tage**

| Estrichzusammensetzung | Haftfestigkeit [N/mm²] | Bruch |
|---|---|---|
| Beispiel 1 | 0,54 | zwischen Kleber und Membran |

Die Ergebnisse der Tabelle 2a/2b und Tabelle 3a/3b zeigen, dass die erfindungsgemäße Bodenkonstruktion deutliche Vorteile bei den Haftzugfestigkeiten nach 4 Stunden und 24 Stunden Aushärtungszeit der Estrichzusammensetzung gemäß Beispiel 1 im Vergleich zu den Vergleichsbeispielen 1 und 2 aufweist. Das Vergleichsbeispiel 2 erreicht nach Trocknungszeiten von 4h bzw. 24 h keine Festigkeitswerte nach drei Tagen Haftzugprüfung. Alle Festigkeitswerte steigen bei längeren Aushärtungszeiten an, z.B. vom dritten bis zum siebten Tag nach dem Aufbringen der Membran. Tabelle 4 zeigt auch bei der Verwendung des pulverförmigen Klebstoffs zum Verkleben der Bahnmembran für die Haftung gute Werte. Die Festigkeitswerte der erfindungsgemäßen Baukonstruktion sind mehr oder weniger unabhängig von der Schichtdicke.

### Beispiel 3

Ferner wurden das Trocknungsverhalten der aus den

Estrichzusammensetzungen des Beispiels 1 und der Vergleichsbeispiele 1 und 2 erhaltenen Estrichmassen getestet.

Hierzu wurde die Restfeuchtigkeit der Estriche gemäß dem CM-Verfahren mit Calciumcarbid-Messgerät bestimmt.

Tabelle 5 zeigt die Ergebnisse für die Estriche für unterschiedliche Schichtdicken und unterschiedliche Härtungsdauern bei einer Lagerung bei Raumtemperatur und etwa 75% Luftfeuchtigkeit.

**Tabelle 5.**

| | | **Restfeuchtigkeit [CM-%]** | | |
|---|---|---|---|---|
| Schichtdicke | Härtungsdauer | Vergleichsbeispiel 1 | Beispiel 1 | Vergleichsbeispiel 2 |
| 10 mm | 4 h | 7,00 | 6,70 | 6,00 |
| 10 mm | 1 d | 5,29 | 4,90 | 4,69 |
| 10 mm | 3 d | 3,59 | 3,09 | 3,16 |
| 20 mm | 3 d | 4,90 | 4,00 | 3,90 |
| 30 mm | 7 d | 3,50 | 3,50 | 3,60 |
| 50 mm | 7 d | 4,69 | 4,19 | 4,60 |

Tabelle 6 zeigt Ergebnisse für die Estriche für unterschiedliche Schichtdicken und unterschiedliche Härtungsdauern bei einer Lagerung bei 5 °C.

**Tabelle 6.**

| | | **Restfeuchtigkeit [CM-%]** | | |
|---|---|---|---|---|
| Schichtdicke | Härtungsdauer | Vergleichsbeispiel 1 | Beispiel 1 | Vergleichsbeispiel 2 |
| 10 mm | 1 d | 5,00 | 4,69 | 4,90 |
| 10 mm | 3 d | 3,19 | 2,59 | 3,40 |
| 20 mm | 3 d | 4,29 | 3,69 | 4,10 |

Tabelle 5 zeigt die schnelleren Trocknungseigenschaften des erfindungsgemäß eingesetzten Beispiels 1 im Vergleich zu den Vergleichsbeispielen. Aus dem Vergleich von Tabelle 5 und Tabelle 6 ist ersichtlich, dass die Trocknungseigenschaften des Beispiels mehr oder weniger unabhängig von der Temperatur sind, insbesondere im Vergleich zu Vergleichsbeispiel 2.

### Beispiel 4

Mit den Estrichzusammensetzungen gemäß Beispiel 1 und den Vergleichsbeispielen 1 und 2 wurden Druckfestigkeiten und Biegezugfestigkeit gemäss Standard EN 1015-11:1999+A1:2006 an Prismen der Abmessungen 40 x 40 x 160 mm nach den in Tabelle 7 angegebenen Zeiten gemessen. Zur Herstellung der Estrichmasse wurden die Estrichzusammensetzungen gemäß Beispiel 1 und den Vergleichsbeispielen 1 und 2 mit Wasser vermischt. Für Beispiel 1 wurden einmal 3,5 I Wasser pro 25 kg Zusammensetzung verwendet und einmal 2.9 I Wasser pro 25 kg Zusammensetzung verwendet. Gemäß den Herstellerangaben wurden Schönox^{®} CLS 3,5 I Wasser pro 25 kg Zusammensetzung und für Centro^{®} GA#50 Speed 4,5 I Wasser pro 25 kg Zusammensetzung verwendet.

Die folgende Tabelle 7 zeigt die Ergebnisse der Messungen.

**Tabelle 7.**

| | Schönox^{®} CLS | Centro^{®} GA#50 Speed | Beispiel 1 | Beispiel 1 |
|---|---|---|---|---|
| Wasser auf 25 kg Pulver [Liter] | 3.5 | 4.5 | 3.5 | 2.9 |
| Druckfestigkeit, 4h [MPa] | n.m. | n.m. | 6.3 | 8.0 |
| Druckfestigkeit, 28d [MPa] | 31.3 | 34.2 | 36.2 | 42.6 |
| Biegezugfestigkeit, 4h [MPa] | n.m. | n.m. | 1.7 | 2.2 |
| Biegezugfestigkeit, 28d [MPa] | 7.6 | 8.1 | 8.7 | 10.4 |

| | | | | |
|---|---|---|---|---|
| n.m. nicht messbar | | | | |

Tabelle 7 zeigt beste Druckfestigkeiten sowie Biegezugfestigkeiten am erfindungsgemässen Beispiel 1 nach kurzer Aushärtezeit von 4h sowie nach längerer Aushärtezeit von 28d. Dies gilt bei beiden getesteten Mengenverhältnissen von Wasser zu Estrichzusammensetzung.

## Patentansprüche

1. Verfahren zur Herstellung einer Bodenkonstruktion auf einem Substrat, umfassend die folgenden Schritte
a) Vermischen einer Estrichzusammensetzung mit Wasser unter Bildung einer Estrichmasse,
b) Aufbringen der Estrichmasse auf das Substrat,
c) Trocknen lassen der Estrichmasse unter Bildung eines abgetrockneten Estrichs und
d) Aufbringen einer Abdichtung auf den abgetrockneten Estrich durch
d1) Aufkleben einer bahnenförmigen oder plattenförmigen Membran auf den abgetrockneten Estrich mittels eines Klebers oder
d2) Aufbringen eines fließfähigen oder pastösen Abdichtungsstoffes auf den abgetrockneten Estrich, wobei der Abdichtungsstoff nach Verfestigung die Abdichtung bildet, und
e) gegebenenfalls Aufbringen eines Bodenbelags auf die Abdichtung,
wobei die Estrichzusammensetzung umfasst
i) ein Aluminat-Bindemittel ausgewählt aus Calciumaluminatzement und/oder Calciumsulfoaluminatzement,
ii) ein Calciumsulfat-Bindemittel ausgewählt aus Calciumsulfat-Hemihydrat und/oder Calciumsulfat-Anhydrit und
iii) einen oder mehrere Füllstoffe,
wobei die Menge an Füllstoff 30 bis 80 Gew.-% beträgt und die Gesamtmenge an Aluminat-Bindemittel und Calciumsulfat-Bindemittel 20 bis 70 Gew.-% beträgt, wobei das Gewichtsverhältnis von Aluminat-Bindemittel zu Calciumsulfat-Bindemittel im Bereich von 1:1 bis 1:5 liegt, wobei sich die Gewichtsangaben auf das Trockengewicht der Estrichzusammensetzung beziehen.

2. Verfahren nach Anspruch 1, wobei das Gewichtsverhältnis von Aluminat-Bindemittel zu Calciumsulfat-Bindemittel im Bereich von 1:1,6 bis 1:4, bevorzugt 1:2 bis 1:3,5, bevorzugter 1:2,1 bis 1:3, liegt.

3. Verfahren nach Anspruch 1 oder Anspruch 2, wobei die Menge an Füllstoff 35 bis 75 Gew.-% beträgt und/oder die Gesamtmenge an Aluminat-Bindemittel und Calciumsulfat-Bindemittel 20 bis 60 Gew.-%, bevorzugt 24 bis 55 Gew.-%, bevorzugter 24 bis 35 Gew.-%, beträgt.

4. Verfahren nach einem der vorhergehenden Ansprüche, wobei die Estrichzusammensetzung umfasst:
i) 5 bis 15 Gew.-% des Aluminat-Bindemittels,
ii) 15 bis 40 Gew.-%, bevorzugt 15 bis 30 Gew.-%, des Calciumsulfat-Bindemittels und
iii) 50 bis 75 Gew.-% des oder der Füllstoffe.

5. Verfahren nach einem der vorhergehenden Ansprüche, wobei die Estrichzusammensetzung ferner mindestens ein Polyol mit einer Funktionalität von 4 oder kleiner und einer Dichte an OH-Gruppen von mindestens 0,033 mol OH pro g Polyol umfasst, bevorzugt in einer Menge von 0,5 Gew.-% bis 10 Gew.-%, bevorzugter 1,2 Gew.-% bis 6,5 Gew.-%, bezogen auf das Gewicht des Aluminat-Bindemittels.

6. Verfahren nach Anspruch 5, wobei
der oder die Füllstoffe Sand und/oder Calciumcarbonat umfassen und/oder
das mindestens eine Polyol Glycerin und/oder Erythritol ist.

7. Verfahren nach einem der vorhergehenden Ansprüche,
wobei die Estrichzusammensetzung ferner mindestens ein Lithiumsalz, bevorzugt Lithiumcarbonat oder Lithiumsulfat, enthält, bevorzugt in einer Menge von 0,001 bis 0,5 Gew.-%, bevorzugter 0,005 bis 0,05 Gew.- %, und/oder
wobei die Estrichzusammensetzung ferner Weinsäure und/oder ein Weinsäuresalz, bevorzugt ein Alkalimetallsalz der Weinsäure, enthält, bevorzugt in einer Menge von 0,15 bis 0,005 Gew.-%, bevorzugter 0,1 bis 0,01 Gew.-%, besonders bevorzugt 0,08 bis 0,015 Gew.-%.

8. Verfahren nach einem der vorhergehenden Ansprüche, wobei das Substrat ein Betonsubstrat ist.

9. Verfahren nach einem der vorhergehenden Ansprüche, wobei der Estrich eine Schichtdicke im Bereich von 3 bis 100 mm, bevorzugt 10 bis 75 mm, aufweist.

10. Verfahren nach einem der vorhergehenden Ansprüche, wobei die Trocknungszeit des Estrichs im Wesentlichen unabhängig von der Schichtdicke des Estrichs ist, wobei die Schichtdicke bevorzugt im Bereich von 10 bis 75 mm liegt.

11. Verfahren nach einem der vorhergehenden Ansprüche, wobei die Dauer des Trocknens der Estrichmasse gemäß Schritt c) bis zur Belegreife nicht mehr als 24 Stunden, bevorzugt weniger als 10 Stunden, bevorzugter im Bereich von 3 bis 8 Stunden, besonders bevorzugt 4 bis 6 Stunden, beträgt.

12. Verfahren nach einem der vorhergehenden Ansprüche, wobei die bahnenförmige oder plattenförmige Membran eine ein- oder mehrschichtige Kunststofffolie umfasst und/oder
wobei der Kleber eine Polymerdispersion oder eine auf Pulver basierte Dispersion oder ein Fliesenkleber ist, oder
der fließfähige oder pastöse Abdichtungsstoff aus einer Polymerdispersion, einem Dichtschlamm oder einem Reaktionsharz ausgewählt ist.

13. Verfahren nach einem der vorhergehenden Ansprüche, wobei der Bodenbelag ein Fliesenbelag, ein Plattenbelag oder ein kunststoffbasierter Belag ist.

14. Bodenkonstruktion, umfassend ein Substrat, einen über dem Substrat liegenden Estrich, eine über dem Estrich liegende Abdichtung, die eine aufgeklebte bahnenförmige oder plattenförmige Membran oder ein in fließfähiger oder pastöser Form aufgebrachter und dann verfestigter Abdichtungsstoff ist, und gegebenenfalls ein über der Abdichtung liegender Bodenbelag, wobei der Estrich aus einer mit Wasser gemischten und gehärteten Estrichzusammensetzung gebildet ist, die umfasst
i) ein Aluminat-Bindemittel ausgewählt aus Calciumaluminatzement und/oder Calciumsulfoaluminatzement,
ii) ein Calciumsulfat-Bindemittel ausgewählt aus Calciumsulfat-Hemihydrat und/oder Calciumsulfat-Anhydrit und
iii) einen oder mehrere Füllstoffe,
wobei die Menge an Füllstoff 30 bis 80 Gew.-% beträgt und die Gesamtmenge an Aluminat-Bindemittel und Calciumsulfat-Bindemittel 20 bis 70 Gew.-% beträgt, wobei das Gewichtsverhältnis von Aluminat-Bindemittel zu Calciumsulfat-Bindemittel im Bereich von 1:1 bis 1:5 liegt, wobei sich die Gewichtsangaben auf das Trockengewicht der Estrichzusammensetzung beziehen.

15. Bodenkonstruktion nach Anspruch 14, wobei die
Estrichzusammensetzung wie in einem der Ansprüche 2 bis 7 definiert ist und/oder das Substrat wie in Anspruch 8 definiert ist und/oder der Estrich wie in Anspruch 9 definiert ist und/oder die bahnenförmige oder plattenförmige Membran wie in Anspruch 12 definiert ist und/oder der Kleber wie in Anspruch 12 definiert ist und/oder der fließfähige oder pastöse Abdichtungsstoff wie in Anspruch 12 definiert ist und/oder der Bodenbelag wie in Anspruch 13 definiert ist.

16. Bodenkonstruktion nach Anspruch 14 oder Anspruch 15, erhältlich nach einem Verfahren nach einem der Ansprüche 1 bis 13.
